# EUROPÄISCHE PATENTSCHRIFT

(11) **EP 1 445 222 B1**
(45) Veröffentlichungstag und Bekanntmachung des Hinweises auf die Patenterteilung: **18.10.2006**
(21) Anmeldenummer: 03018431.1
(22) Anmeldetag: 14.08.2003
(51) Int. Cl.: B65G 69/00

(54) **Vorrichtung zur Dichtung eines Spaltes zwischen dem Rand einer Überladebrücke und eines Fahrzeuges**
Sealing device for a gap between a loading dock and a vehicle
Dispositif d'étanchéité entre un pont de chargement et un véhicule

(30) Priorität: 10.02.2003 DE 10305565
(43) Veröffentlichungstag der Anmeldung: 11.08.2004
(73) Patentinhaber: Grunewald, Niclas, 20146 Hamburg (DE)
(72) Erfinder: Grunewald, Niclas, 20146 Hamburg (DE)
(74) Vertreter: Vonnemann, Gerhard

(56) Entgegenhaltungen:
- US-A- 4 020 607
- US-A- 4 293 969
- US-A- 5 007 211
- US-A- 5 167 101
- US-A1- 2002 152 562

## Beschreibung

Die Erfindung betrifft eine Vorrichtung zur Dichtung eines Spaltes zwischen dem Rand einer Gebäudeöffnung und dem Heck eines herangefahrenen Fahrzeuges.

Außerdem betrifft die Erfindung ein Verfahren zum Betreiben einer Vorrichtung zur Dichtung eines Spaltes zwischen dem Rand einer Gebäudeöffnung und dem Heck eines herangefahrenen Fahrzeuges.

Derartige Vorrichtungen zum Dichten des Spalts zwischen dem Rand einer Gebäudeöffnung und dem Heck eines herangefahrenen Fahrzeuges sind beispielsweise aus der DE 33 42 732 A 1, der DE 37 10 528 A 1, der DE 30 49 358 C 2, der DT 25 55 201 A 1, der DE 199 06 486 C 1 und der US 5,007,211 bekannt.

Allen diesen Vorrichtungen ist gemeinsam, dass sie den Spalt zwischen der Gebäudeöffnung und einem an diese Gebäudeöffnung herangefahrenen Fahrzeuge lediglich seitlich und oben dichten. Unten wird der Spalt zwischen der Gebäudeöffnung und dem Fahrzeug durch eine Überladebrücke teilweise verschlossen, deren Plattform auf die Ladefläche eines Fahrzeugs aufgelegt wird, um das Fahrzeug zu be- oder entladen.

Nachteilig an diesen bekannten Konzepten ist, dass zwischen den seitlichen Dichtungen und der Überladebrücke Öffnungen bleiben, durch die ein Luftaustausch zwischen der Außenluft und dem Inneren der Verladestation stattfinden kann. Aufgrund der notwendigen Lagetoleranzen eines an die Gebäudeöffnung heranfahrenden Fahrzeugs müssen die Überladebrücken in ihrer Breite stets schmaler sein als die Ladefläche des Fahrzeugs. Die genannten Öffnungen sind also systembedingt notwendig. Insbesondere bei Logistikketten, die beispielsweise tiefgefrorene Ware bei einer bestimmten Temperatur oder ein bestimmtes Klima für das Transportgut aufrecht erhalten müssen, werden diese Öffnungen als nachteilig empfunden.

Außerdem kann es beispielsweise bei Kühlhäusern zum Befrieren der Überladebrücken kommen, weil die eintretende Warmluft vorhandene Feuchtigkeit an der Oberfläche der Überladebrücke kondensiert. Der so entstehende Tau kann auch gefrieren, was die Arbeitssicherheit gefährdet.

Desweiteren ist aus der US 4,293,969 und US 2002/0152562 A1 eine Dichtung bekannt, die lediglich den Spalt zwischen Überladebrücke und Grubenboden dichtet, in dem die Überladebrücke montiert ist. Der zuvor erwähnten Freiraum zwischen seitlicher vertikaler Dichtung und dem LKW, kann von dieser Dichtung nicht verschlossen werden. Die Dichtung weist die Breite der Grube auf.

Schließlich ist aus der US-A-4020607 eine vierseitige Dichtungsvorrichtung bekannt, die dazu dient, eine luftdichte Abdichtung zwischen der Gebäudeöffnung und den Seiten eines in die Gebäudeöffnung eingefahrenen Fahrzeuges bereitzustellen. Die Dichtung besteht aus einer Kissenstruktur, die mittels Vakuum zusammenfällt. Sie dichtet in der Ebene der Gebäudewand gegen den äußeren Umfang des LKW,

Nachteilig an dieser Dichtung ist, dass sie nur unter Vakuum zusammenfällt. Bei Betriebsstörungen, beispielsweise Stromausfall, kann ein LKW die Ladeöffnung nicht verlassen, da dann die Dichtung anliegt. Außerdem stören übliche Anbauten wie Nummernschilder, Rücklichter etc. am LKW beim Einfahren der Aufbauten in die geschlossene Dichtung.

Aufgabe der Erfindung ist es, eine Vorrichtung zum besseren Abdichten des Spalts zwischen einer Gebäudeöffnung und dem Heck eines heranfahrenden Fahrzeugs vorzuschlagen, die auch die systembedingten verbleibenden Öffnungen rechts und links neben der Überladebrücke dichtet und die Nachteile der bekannten Lösungen vermeidet.

Die Aufgabe wird bei einer gattungsgemäßen Vorrichtung dadurch gelöst, dass ein Dichtungsteil den Spalt zwischen dem unteren Rand der Gebäudeöffnung und dem Fahrzeug und / oder einer auf eine Ladefläche des Fahrzeugs aufgelegten Überladebrücke überbrückend angeordnet ist, das Dichtungsteil breiter als die in der Gebäudeöffnung vorgesehene Überladebrücke und in der Aufsicht u-förmig mit den freien Schenkeln zum Fahrzeug weisend ausgebildet ist..

Da das Dichtungsteil die gesamte Breite der Überladebrücke und etwas darüber überspannt, dichtet sie auch über die seitlichen Kanten der Überladebrücke hinaus. Bei unterfahrbaren Überladebrücken, also solchen, bei denen unter der Überladebrücke eine Öffnung vorgesehen ist, in die herabgesenkte Ladebordwände eintauchen können, wird die Gebäudeöffnung meist von einem Querbalken der Überladebrücke gebildet. In diesen Fällen ist das Dichtungsteil auf dem Querbalken der Überladebrücke bevorzugt anzuordnen. Dann legt sich das Dichtungsteil gegen die bewegliche Brückenplatte der Überfahrbrücke an.

Da das Dichtungsteil in der Aufsicht u-förmig ausgebildet und / oder mit den freien Schenkeln zum Fahrzeug weisend angeordnet ist, und das Dichtungsteil breiter als die in der Gebäudeöffnung vorgesehene Überladebrücke ausgebildet ist, werden die vorhandenen Spalte rechts und links der Ladebrücke geschlossen. Das Dichtungsteil überspannt bevorzugt die gesamte Breite der Gebäudeöffnung.

Einfach und robust lässt sich das Dichtungsteil gestalten, wenn das Dichtungsteil aufblasbar ausgebildet ist. Ein solches Dichtungsteil passt sich mit Vorteil auch an Anbauten des Fahrzeugs an, so dass es besonders gut dichtet, Es beschädigt das Fahrzeug nicht und weist einen geringen Wärmedurchlass auf.

Zusätzliche mechanische Antriebe sind nicht erforderlich, da das Dichtungsmaterial von der einströmenden Luft in die dem Zuschnitt entsprechenden Form gedrückt wird.

Wenn das Dichtungsteil ein in der Höhe motorisch verstellbares Scherenelement und / oder ein Rollo aus aneinandergereihten Lamellen aufweist, kann die Dichtung auch so gestaltet werden, dass sie Einbrüchen besser vorbeugt. Ein Einsteigen in den Innenraum der Ladebucht wird durch das feste Rollo aus aneinandergereihten Lamellen wesentlich erschwert.

Mit Vorteil können auch bereits vorhandene Gebläse für das erfindungsgemäße Dichtungsteil genutzt werden, wenn weitere Dichtungsteile, vorzugsweise aufblasbare Dichtungsteile, um die Gebäudeöffnung angeordnet sind.

Damit das Gebläse ständig fördert und kein Strömungsabriss entsteht, ist vorteilhafterweise vorgesehen, dass das Dichtungsteil mit Austrittsöffnungen für Luft ausgestattet ist.

In Ausgestaltung der Erfindung ist zur Versorgung des Dichtungsteils mit Luft vorgesehen, dass das Dichtungsteil ein Luftgebläse mit einer Luftversorgungsleitung für das Dichtungsteil aufweist, wobei das Gebläse insbesondere reversierbar ausgebildet ist. Dadurch, dass das Gebläse reversierbar ausgebildet ist, kann die Luft auch schnell wieder aus der Dichtung entfernt werden und das Fahrzeug die Ladeöffnung verlassen.

Die verschiedenen Dichtungen können mit einem einzigen Gebläse versorgt werden, wenn in der Luftversorgungsleitung eine motorisch zu betätigende Umschaltklappe vorgesehen ist. In äquivalenter Weise kann selbstverständlich auch durch entsprechende Ventile in den Versorgungsleitungen diese willkürlich geschlossen und geöffnet werden, so dass vorgesehene aufblasbare Dichtungsteile gleichzeitig oder nacheinander in Folge versorgt werden können.

Die Inbetriebnahme der Dichtung kann vorteilhaft automatisiert werden, wenn das Gebläse über eine Wirkverbindung mit einer Steuerung der Überladebrücke verbunden ist. Beispielsweise wird von der Steuerung das Gebläse dann in Betrieb gesetzt, wenn die Überladebrücke auf die Ladefläche des herangefahrenen LKW abgesenkt ist. Sobald dann die Überladebrücke den Befehl zur Rückkehr in die Ruhelage erhält, kann gleichzeitig oder vorher auch das Gebläse ausgeschaltet werden, so dass die Dichtung aufgrund der durch die Öffnungen weiter ausströmende Luft in sich zusammenfällt. Diese Zeit kann, falls gewünscht, weiter verkürzt werden, wenn das Gebläse kurze Zeit reversiert betrieben wird.

Wenn zwischen dem Dichtungsteil und dem Gebläse in der Luftversorgungsleitung eine motorisch zu betätigende Umschaltklappe vorgesehen ist, kann auch eine weitere aufblasbare Dichtung, die beispielsweise den Rest der Gebäudeöffnung umrandet, von demselben Gebläse aufgeblasen werden. Die Luft sich dann wahlweise in das eine oder andere Dichtungsteil leiten. Auf ein zusätzliches Gebläse, wenn bereits für eine aus dem Stand der Technik bekannte aufblasbare Dichtung das Gebläse vorhanden ist, kann also mit Vorteil auf ein zweites Gebläse verzichtet werden.

Dadurch, dass das in der Luftversorgungsleitung eine motorisch zu betätigende Umschaltklappe vorgesehen ist, vereinfacht sich die Handhabung sich wesentlich. Es sind also keine besonderen zusätzlichen Steuerungselemente vorgesehen. Eine Fehlbedienung der Dichtung wird durch diese Maßnahme wirkungsvoll verhindert.

Die Dichtung bläst sich demnach erst auf, wenn das Fahrzeug sich bereits in seiner Parkposition befindet und die Überladebrücke auf die Ladefläche aufgelegt ist.

Die Aufgabe wird durch ein Verfahren zum Betrieb eines Dichtungsteil bei dem das Dichtungsteil erst nach einem Andocken eines Fahrzeugs an die Gebäudeöffnung aus einer Ruhelage in die Dichtposition gefahren wird dadurch gelöst, dass das Startsignal für das Dichtelement zum Anfahren der Dichtposition von der Überladebrückensteuerung erzeugt wird, sobald die Betriebsposition der Überladebrücke erreicht ist. Dann läuft das Abdichten des Spaltes zwischen der Gebäudeöffnung und dem Fahrzeug weitgehend automatisch ab. Dies lässt sich dadurch verwirklichen, dass nach Erteilen des Absenkungsbefehls der Steuerung die Steuerung selbsttätig nach Ablauf einer voreingestellten Zeit das Signal zum Aufblasen erteilt.

Mit Vorteil wird zunächst ein ggf. vorhandenes aufblasbares Dichtelement mit Druckluft versorgt. Daran anschließend ist vorgesehen, dass das Anfahren der Dichtposition durch Betätigen der Umschaltklappe in der Luftversorgungsleitung erfolgt.

Auch das Außerbetriebsetzen des Dichtungsteil erfolgt vorteilhafterweise weitgehend automatisch, wenn das Signal zum Rückfahren des Dichtungsteils in die Ruhelage von der Überladebrückesteuerung erzeugt wird. Der befehl wird beispielsweise von der Steuerung erteilt, sobald eine voreingestellte Zeit seit Betätigen des "Heben"-Tasters abgelaufen ist.

Dieser Vorgang lässt sich noch zeitlich dadurch verkürzen, dass das Rückfahren des Dichtungsteils in die Ruhelage durch Umkehrung des Gebläses erfolgt.

Während des Betriebes verändert sich der Ladezustand des herangefahrenen Fahrzeuges. Aus diesem Grunde verändert sich auch das Niveau der Ladefläche. Das aufblasbare Dichtungsteil kann dieser Bewegung des Fahrzeugs aufgrund seiner eigenen Elastizität folgen und behält dadurch den Kontakt zum Fahrzeug. Anders liegt der Fall, wenn, beispielsweise aus Sicherheitsgründen, ein mechanisch stabiles Rollo als Dichtungsteil eingesetzt wird. Damit das Rollo keinen Schaden nimmt und trotzdem den Kontakt zum Fahrzeug beibehält, ist mit Vorteil vorgesehen, dass eine selbsttätige Lageregelung vorgesehen ist, die die Lage des Dichtungsteils an die sich verändernde Lage der Überladebrücke selbsttätig anpasst.

Die Erfindung wird in einer bevorzugten Ausführungsform unter Bezugnahme auf eine Zeichnung beschrieben, wobei weitere vorteilhafte Einzelheiten den Figuren der Zeichnungen zu entnehmen sind. Funktionsmäßig gleiche Teile sind dabei mit denselben Bezugsziffern versehen.

Die Figuren der Zeichnungen zeigen im Einzelnen:
- Figur 1: eine perspektivische Darstellung einer Gebäudeöffnung mit Überladebrücke und einer erfindungsgemäßen Abdichtung im Ruhezustand,
- Figur 2: die Gebäudeöffnung gemäß Figur 1, jedoch mit einem Dichtungsteil in Betriebsstellung,
- Figur 3: die Gebäudeöffnung gemäß Figur 1 von frontaler Ansicht,
- Figur 4: die Gebäudeöffnung gemäß Figur 1 in einem Vertikalschnitt,
- Figur 5: ein Detail gemäß Figur 4,
- Figur 6: eine Gebäudeöffnung mit einer Überladebrücke und einem alternativ ausgebildeten Dichtungsteil im Ruhezustand,
- Figur 7: eine Gebäudeöffnung gemäß Figur 6 mit dem alternativen Dichtungsteil in Betriebsstellung,
- Figur 8: eine Gebäudeöffnung gemäß Figur 6 als Frontansicht,
- Figur 9: eine Gebäudeöffnung gemäß Figur 6 als Vertikalschnitt,
- Figur 10: ein Detail gemäß Figur 9 und
- Figur 11: eine schematische Darstellung der Gebläseluftführung zum erfindungsgemäßen Dichtungsteil.

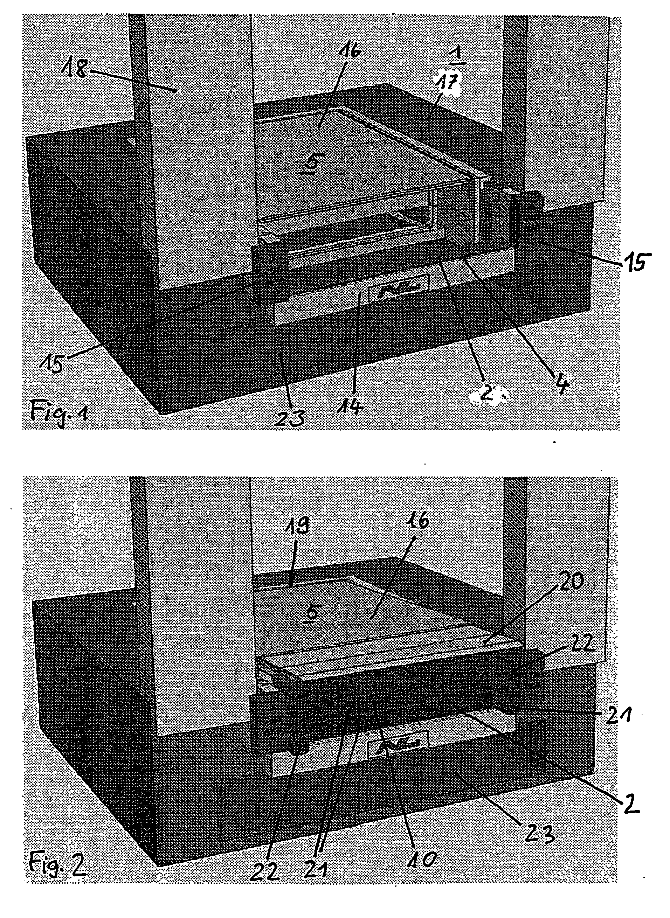

In Figur 1 ist eine Gebäudeöffnung 1 dargestellt, in der bündig mit der Verkehrsebene die Platte einer Überladebrücke 5 sichtbar ist. Der untere Rand 4 der Gebäudeöffnung wird von einem Balken 14 der Überladebrücke berandet. Auf diesem Balken 14 ist das in Ruhestellung gezeigte Dichtungsteil 2 sichtbar.

Die Endstellung eines nicht dargestellten Fahrzeuges wird durch zwei rechts und links der Überladebrücke 5 angeordnete Puffer 15 bestimmt. Im Ruhezustand bildet die Brückenplatte 16 der Überladebrücke 5 eine Ebene mit der Verkehrsfläche 17 eines Gebäudes, dessen Gebäudewand 18 die Gebäudeöffnung 1 umrandet.

An der Außenfläche dieser Gebäudewand können zusätzliche bekannte Wulstdichtungen oder aufblasbare Dichtungen um die Gebäudeöffnung angeordnet sein.

Figur 2 zeigt die Gebäudeöffnung gemäß Figur 1, jedoch mit einem Dichtelement 2, das in Betriebsstellung dargestellt ist. Die Brückenplatte 16 ist in der Betriebsstellung um eine Schwenkachse 19 leicht geneigt und eine Verlängerung der Brückenplatte 16 zur Auflage auf die Ladefläche eines nicht dargestellten LKW ausgefahren. In der Betriebsstellung erstreckt sich das Dichtungsteil von dem unteren Rand der Gebäudeöffnung 4, also vom Balken 14, bis zur Verlängerung 20 der Brückenplatte 16. Das dargestellte Dichtungsteil ist als ein aufblasbares Dichtungsteil 10 gestaltet, das aus einzelnen Wülsten 21, hier vier an der Zahl, nach oben gestapelt ist. Die Wülste 21 haben in der Aufsicht im ausgefahrenen Zustand einen u-förmigen Schnitt, wobei die freien Schenkel 22 zum Fahrzeug weisend angeordnet sind.

Zur besseren Übersicht ist das an die Öffnung herangefahrene Fahrzeug nicht dargestellt. Ebenso wenig ist eine horizontalen Platte dargestellt, die die Tasche 23, die für das Eintauchen einer Ladebordwand unterhalb der Überfahrbrücke 5 vorgesehen ist, zusätzlich abdichtet. Diese nicht dargestellte horizontale untere Abdichtung ist aus der DE 43 10 788 C1 bekannt.

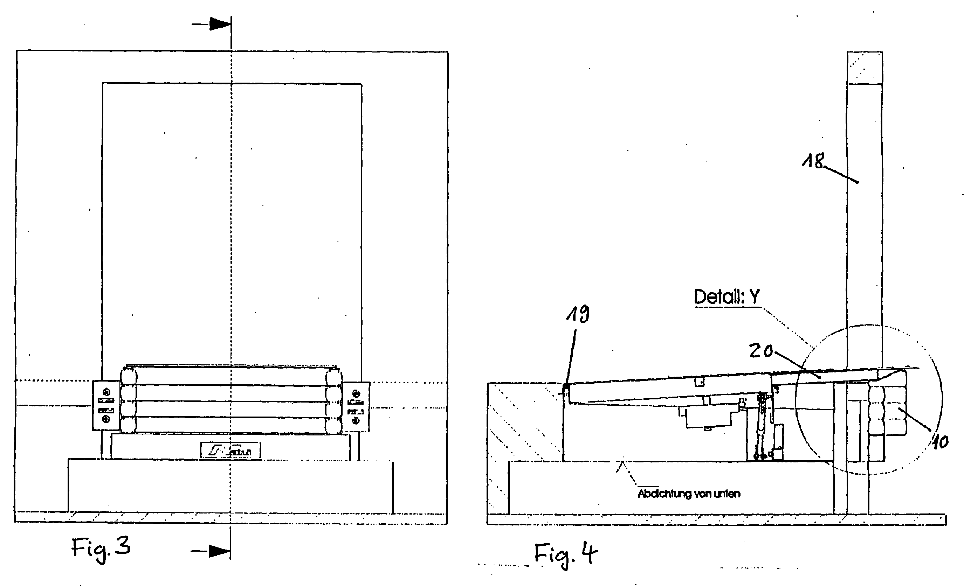

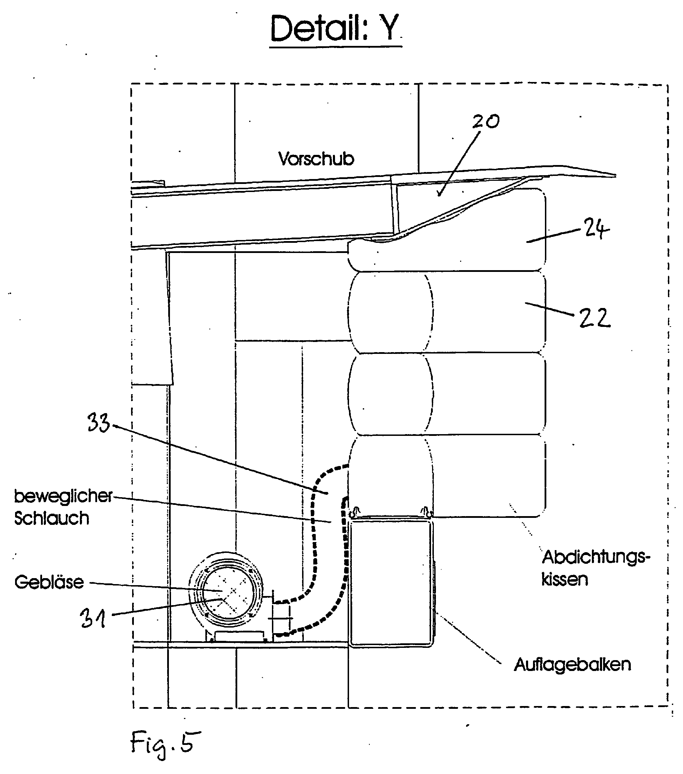

Aus den in den Figuren 3 und 4 dargestellten Ansichten, der Vorderansicht und einem Vertikalschnitt, ist erkennbar, dass die sonst systembedingten vertikalen und horizontalen Querschnitte der Öffnung zwischen der Brückenplatte 16 bzw. dem Gebäude und dem Fahrzeug durch die erfindungsgemäße Dichtung wesentlich verringern lassen bzw. diese Öffnung vollkommen schließen.

In Figur 5 ist die Dichtung in einem Vertikalschnitt als Detail dargestellt. Deutlich erkennbar ist, wie sich beispielsweise die aufblasbare Dichtung mit ihrem obersten Wulst 24 an das dreieckförmige Ende der Verlängerung 20 anschmiegt. Das den Wulst 24 überragende Ende der Verlängerung 20 ist zur Auflage auf die Ladefläche eines LKW vorgesehen.

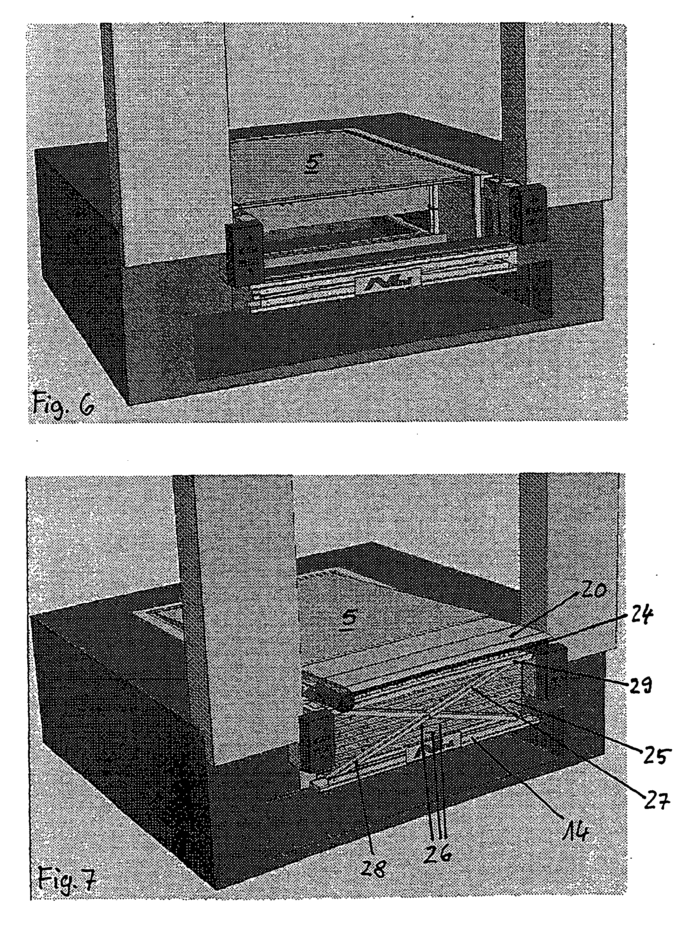

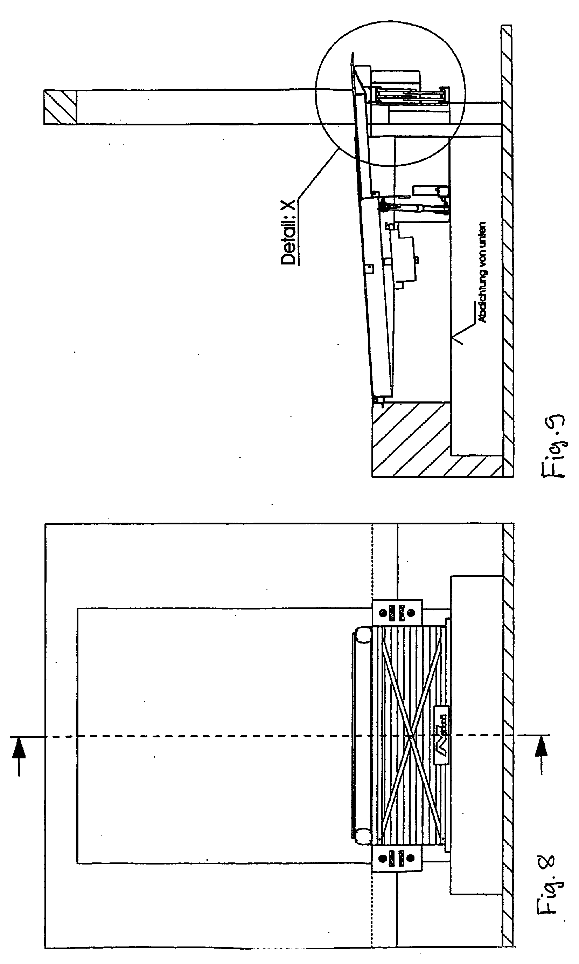

In den Figuren 6 und 7 ist aus gleichen Ansichten wie bei den Figuren 1 und 2 die Gebäudeöffnung dargestellt, wobei das Dichtungsteil 2 nur noch den obersten Wulst 24 aufweist und im übrigen den Spalt zwischen der Verlängerung 20 und dem Balken 14 durch ein Rollo 25 verschließt. Das Rollo 25 besteht aus einzelnen Lamellen 26, die die Gebäudeöffnung unterhalb der Verlängerung mechanisch stabil verschließen. Das Rollo 25 wird zusätzlich gestützt und geführt von einer Hebevorrichtung, die Figur 7 als Schere ausgebildet ist. Die Schere weist eine Konstruktion auf, die im wesentlichen analog zu einem bekannten Scherenhubtisch funktioniert. Durch motorischen Antrieb mittels eines beispielsweise nicht dargestellten Hydraulik- oder Pneumatikzylinders lässt sich ein oberer beweglicher Querbalken 29 anheben, an dem auch das nicht aufgerollte, freie Ende des Rollos befestigt ist. An der Oberseite des beweglichen Querbalkens 29 ist dann der oberste Wulst 24 befestigt, der sich dichtend an die ausgefahrene Verlängerung 20 der ausgefahrenen Brückenplatte 16 anlegt.

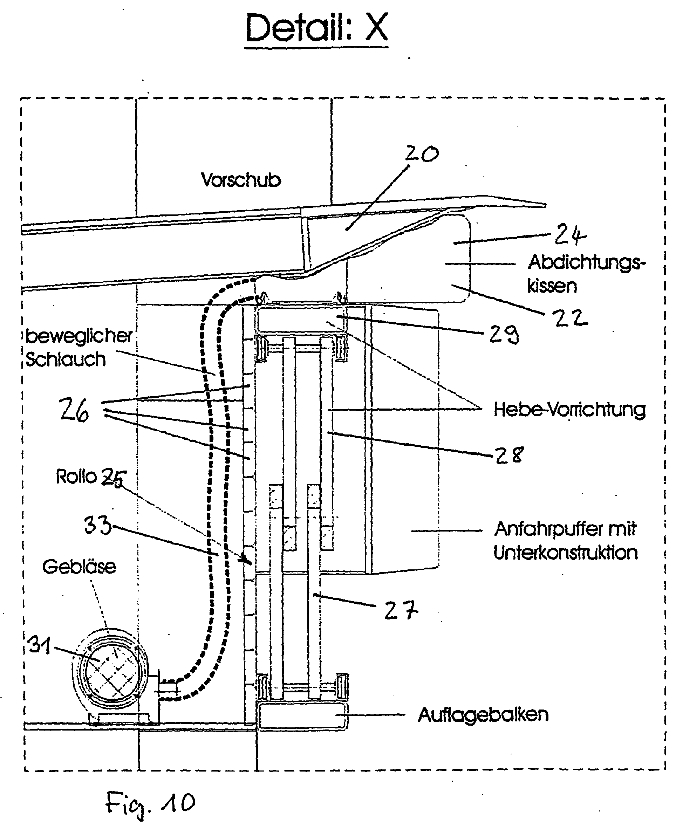

Die Konstruktion der alternativen Ausführungsform des Dichtungsteiles ist aus den Figuren 8 und 9 für den Fachmann als Frontansicht und Vertikalschnitt dargestellt.

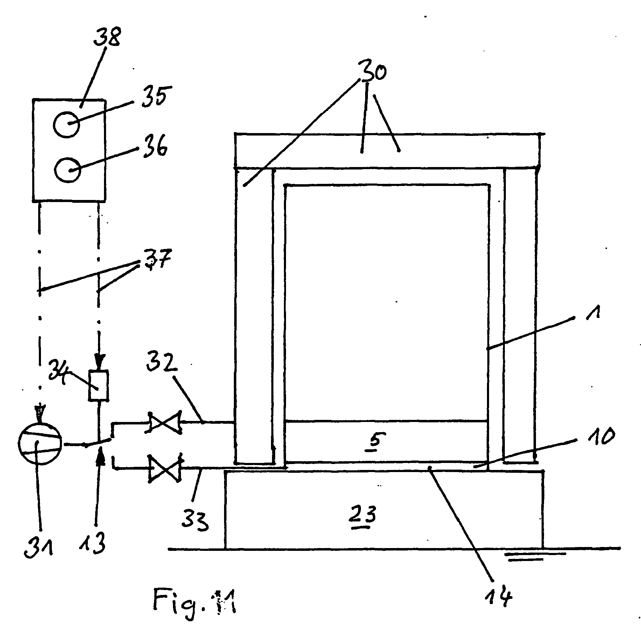

Die Figur 10 zeigt das Detail x gemäß Figur 9 in vergrößerter Darstellung.

In Figur 11 ist schematisch die Luftversorgung des Dichtungsteils dargestellt. Um die Gebäudeöffnung 1 sind seitlich und oberhalb der Gebäudeöffnung 1 bekannte aufblasbare Wulstdichtungen 30 vorgesehen. Diese Wulstdichtungen 30 werden von einem Gebläse 31 über eine Luftversorgungsleitung 32 vom Gebläse mit Luft entsprechenden Drucks beaufschlagt. Sie legen sich dadurch an das Profil eines herangefahrenen LKW an. Zusätzlich ist das aufblasbare Dichtungsteil 10 oberhalb des Balkens 14 gezeigt, das durch eine zweite Luftversorgungsleitung 33 gespeist wird.

Mittels einer Umschaltklappe 13 kann wahlweise die Luftversorgung der Wulstdichtung 30 oder über Leitung 33 das aufblasbare Dichtungsteil 10 vom Gebläse 31 versorgt werden.

Selbstverständlich können alternativ auch zwei Gebläse vorgesehen werden, die den einzelnen Dichtungen zugeordnet sind. Eine Steuerung 15, die zum Ansteuern der Überladebrücke vorgesehen ist, hat zusätzlich geeignete Ausgänge und Wirkverbindungen, um das Gebläse 31 oder alternativ den Antrieb 34 der Umschaltklappe 13 in Betrieb zu setzen.

Ist beispielsweise ein LKW an die Öffnung 1 herangefahren, so wird der Taster 35 von einer Bedienperson gedrückt, um den Befehl zum Heben der Brücke durch die Steuerung zu erteilen. Die Steuerung schwenkt dann die Überladebrücke in ihre obere Position und fährt die Verlängerung aus. Nach Erreichen des ausgefahrenen Zustandes oder nach Loslassen des Tasters 35 wird die Verlängerung auf die Ladefläche des LKW abgesenkt. Gleichzeitig wird ein Zeitzähler in Gang gesetzt, der nach Ablauf von beispielsweise 10 Sekunden dann über die Wirkverbindung 14 das Gebläse 31 in Betrieb setzt, um die Wulstdichtungen bzw. je nach Stellung der Umschaltklappe das Dichtelement 10 aufzublasen.

Wird nach Beendigung des Ladevorgangs der Taster 36 von einer Person gedrückt, um den Befehl zur Rückkehr in die Ruhelage der Überladebrücke zu erteilen, so wird gleichzeitig wieder ein Zähler in Gang gesetzt, der den Befehl für die Brücke erst nach Ablauf von beispielsweise 10 Sekunden gibt. Mit den Drücken des Tasters 36 wird aber sofort das Gebläse 31 still gesetzt, so dass die Dichtungsteile in sich zusammenfallen, bevor die Überladebrücke in ihre Ruhelage zurückkehrt.

Auf diese Weise ist eine sehr effiziente und betriebssichere Dichtung geschaffen worden, die auch die verbliebenen Öffnungen zwischen LKW und Gebäude zuverlässig schließt.

### BEZUGSZEICHENLISTE

- 1.: Gebäudeöffnung
- 2.: Dichtungsteil
- 3.: Spalt
- 4.: unterer Rand
- 5.: Überladebrücke
- 6.: freier Schenkel
- 7.: Scherenelement
- 8.: Rollo
- 9.: Lamelle
- 10.: aufblasbares Dichtungsteil
- 11.: Luftgebläse
- 12.: Luftversorgungsleitung
- 13.: Umschaltklappe
- 14.: Balken
- 15.: Puffer
- 16.: Brückenplatte
- 17.: Verkehrsfläche
- 18.: Gebäudewand
- 19.: Schwenkachse
- 20.: Verlängerung
- 21.: Wulst
- 22.: freie Schenkel
- 23.: Tasche
- 24.: oberster Wulst
- 25.: Rollo
- 26.: Lamellen
- 27.: Hebevorrichtung
- 28.: Schere
- 29.: beweglicher Querbalken
- 30.: Wulstdichtungen
- 31.: Gebläse
- 32.: Luftversorgungsleitung
- 33.: Luftversorgungsleitung
- 34.: Antrieb
- 35.: Taster Heben
- 36.: Taster Rückkehr
- 37.: Wirkverbindung
- 38.: Steuerung

## Patentansprüche

1. Vorrichtung zur Dichtung eines Spaltes zwischen dem Rand einer Gebäudeöffnung (1) und dem Heck eines herangefahrenen Fahrzeuges, wobei ein Dichtungsteil (2) den Spalt (3) zwischen dem unteren Rand (4) der Gebäudeöffnung (1) und dem Fahrzeug und / oder einer auf eine Ladefläche des Fahrzeugs aufgelegten Überladebrücke (5) überbrückend angeordnet ist, **dadurch gekennzeichnet, dass** das Dichtungsteil (2) breiter als die in der Gebäudeöffnung vorgesehene Überladebrücke (5) und in der Aufsicht u-förmig mit den freien Schenkeln (6) zum Fahrzeug weisend ausgebildet ist.

2. Vorrichtung nach Anspruch 1, **dadurch gekennzeichnet, dass** das Dichtungsteil (2) aufblasbar ausgebildet ist.

3. Vorrichtung nach Anspruch 1 oder 2, **dadurch gekennzeichnet, dass** das Dichtungsteil (2) ein in der Höhe motorisch verstellbares Scherenelement (7) und / oder eine Rollo (8) aus aneinandergereihten Lamellen (9) aufweist.

4. Vorrichtung nach einem oder mehreren der vorhergehenden Ansprüche, **dadurch gekennzeichnet, dass** weitere Dichtungsteile (10), vorzugsweise aufblasbare Dichtungsteile (10), um die Gebäudeöffnung (1) angeordnet sind.

5. Vorrichtung nach einem oder mehreren der vorhergehenden Ansprüche, **dadurch gekennzeichnet, dass** das Dichtungsteil (2) mit Austrittsöffnungen für Luft ausgestattet ist.

6. Vorrichtung nach einem oder mehreren der vorhergehenden Ansprüche, **dadurch gekennzeichnet, dass** das Dichtungsteil ein Luftgebläse (11) mit einer Luftversorgungsleitung (12) für das Dichtungsteil (2) aufweist, wobei das Gebläse insbesondere reversierbar ausgebildet ist.

7. Vorrichtung nach einem oder mehreren der vorhergehenden Ansprüche, **dadurch gekennzeichnet, dass** das in der Luftversorgungsleitung (12) eine motorisch zu betätigende Umschaltklappe (13) vorgesehen ist.

8. Vorrichtung nach einem oder mehreren der vorhergehenden Ansprüche, **dadurch gekennzeichnet, dass** das Gebläse (11) über eine Wirkverbindung (37) mit einer Steuerung (38) der Überladebrücke verbunden ist.

9. Verfahren zum Betrieb eines Dichtungsteil gemäß einem oder mehreren der vorhergehenden Ansprüche, wobei das Dichtungsteil (2) erst nach einem Andocken eines Fahrzeugs an die Gebäudeöffnung (1) aus einer Ruhelage in die Dichtposition gefahren wird, **dadurch gekennzeichnet, dass** das Startsignal für das Dichtelement zum Anfahren der Dichtposition von der Überladebrückensteuerung (13) erzeugt wird, sobald die Betriebsposition der Überladebrücke (5) erreicht ist.

10. Verfahren nach Anspruch 11 oder 12, **dadurch gekennzeichnet, dass** das Anfahren der Dichtposition durch Betätigen der Umschaltklappe (13) in der Luftversorgungsleitung (12) erfolgt.

11. Verfahren nach Anspruch 1 bis 13, **dadurch gekennzeichnet, dass** das Signal zum Rückfahren des Dichtungsteils in die Ruhelage, von der Überladebrückesteuerung (13) erzeugt wird.

12. Verfahren nach einem oder mehreren der Ansprüche 1 bis 14, **dadurch gekennzeichnet, dass** das Rückfahren des Dichtungsteils in die Ruhelage durch Umkehrung des Gebläses (11) erfolgt.

13. Verfahren nach einem oder mehreren der Ansprüche 1 bis 15, **dadurch gekennzeichnet, dass** eine selbsttätige Lageregelung vorgesehen ist, die die Lage des Dichtungsteils an die sich verändernde Lage der Überladebrücke selbsttätig anpasst.

## Claims

1. A device for sealing a gap between the edge of a building opening (1) and the rear of a driven-up vehicles, wherein a sealing part (2) is arranged bridging the gap (3) between the lower edge (4) of the building opening (1) and the vehicle and/or a loading gangway (5) applied onto the loading area of the vehicle, **characterised in that** the sealing part (2) is wider than the loading gangway (5) provided in the building opening, and in a plan view is designed u-shaped with the free limbs (6) pointing to the vehicle.

2. A device according to claim 1, **characterised in that** the sealing part (2) is inflatably designed.

3. A device according to claim 1 or 2, **characterised in that** the sealing part (2) has a scissor mechanism (7) motorically adjustable in height and/or a roller blind (8) of slats lined up on one another.

4. A device according to one or more of the preceding claims, **characterised in that** further sealing parts (10), preferably inflatable sealing parts (10) are arranged around the building opening (1).

5. A device according to one or more of the preceding claims, **characterised in that** the sealing part (2) is equipped with exit openings for air.

6. A device according to one or more of the preceding claims, **characterised in that** the sealing part comprises an air blower (11) with an air supply conduit (12) for the sealing part (2), wherein the blower in particular is designed in a reversible manner.

7. A device according to one or more of the preceding claims, **characterised in that** a switch-over flap (13) to be actuated in a motoric manner is provided in the air supply conduit (12).

8. A device according to one or more of the preceding claims, **characterised in that** the blower (11) is connected to a control (38) of the loading gangway via an active connection (37).

9. A method for the operation of a sealing part according to one or more of the preceding claims, wherein the sealing part (2) is only traveled from the rest position into the sealing position after the docking of a vehicle onto the building opening (1), **characterised in that** the start signal for the sealing element for traveling to the sealing position is produced by the loading gangway control (13) as soon as the operating position of the loading gangway (5) has been reached.

10. A method according to claim 11 or 12, **characterised in that** the traveling to the sealing position is effected by actuating the change-over flap (13) in the air supply conduit (12).

11. A method according to claim 1 to 13, **characterised in that** the signal for the travel of the sealing part back into the rest position is produced by the loading gangway control (13).

12. A method according to one or more of the claims 1 to 14, **characterised in that** the travel of the sealing part back into the rest position is effected by reversal of the blower (11).

13. A method according to one or more of the claims 1 to 15, **characterised in that** an automatic position regulation is provided, which automatically adapts the position of the sealing part to the changing position of the loading gangway.

## Revendications

1. Dispositif d'étanchéité d'un intervalle entre le bord d'une ouverture de bâtiment (1) et l'arrière d'un véhicule approchant, un élément d'étanchéité (2) étant agencé de manière à jeter un pont sur l'intervalle (3) entre le bord inférieur (4) de l'ouverture de bâtiment (1) et le véhicule et/ou un pont de chargement (5) installé sur une surface de chargement du véhicule, **caractérisé en ce que** l'élément d'étanchéité (2) est plus large que le pont de chargement (5) prévu dans l'ouverture de bâtiment, et, vu du haut, est conçu en forme de U avec les branches libres (6) orientées vers le véhicule.

2. Dispositif selon la revendication 1, **caractérisé en ce que** l'élément d'étanchéité (2) est gonflable.

3. Dispositif selon la revendication 1 ou 2, **caractérisé en ce que** l'élément d'étanchéité (2) présente un élément en forme de ciseaux (7) réglable en hauteur de manière motorisée et/ou un store (8) constitué de lamelles (9) alignées les unes aux autres.

4. Dispositif selon l'une ou plusieurs des revendications précédentes, **caractérisé en ce que** d'autres éléments d'étanchéité (10), de préférence des éléments d'étanchéité gonflables (10), sont agencés autour de l'ouverture de bâtiment (1).

5. Dispositif selon l'une ou plusieurs des revendications précédentes, **caractérisé en ce que** l'élément d'étanchéité (2) est pourvu d'orifices de sortie d'air.

6. Dispositif selon l'une ou plusieurs des revendications précédentes, **caractérisé en ce que** l'élément d'étanchéité (2) présente un ventilateur (11) ayant un tuyau d'alimentation d'air (12) pour l'élément d'étanchéité (2), le ventilateur étant conçu en particulier de manière réversible.

7. Dispositif selon l'une ou plusieurs des revendications précédentes, **caractérisé en ce qu'**un volet directionnel (13) motorisé est prévu dans le tuyau d'alimentation d'air (12).

8. Dispositif selon l'une ou plusieurs des revendications précédentes, **caractérisé en ce que** le ventilateur (11) est connecté à une commande (38) du pont de chargement par l'intermédiaire d'une connexion active (37).

9. Procédé de fonctionnement d'un élément d'étanchéité selon l'une ou plusieurs des revendications précédentes, l'élément d'étanchéité (2) étant amené d'une position de repos vers sa position étanche uniquement après l'accostage d'un véhicule à l'ouverture de bâtiment (1), **caractérisé en ce que** le signal de démarrage du déplacement de l'élément d'étanchéité dans la position étanche est émis par la commande du pont de chargement (13), aussitôt que la position de fonctionnement du pont de chargement (5) est atteinte.

10. Procédé selon la revendication 11 ou 12, **caractérisé en ce que** le déplacement dans la position étanche est effectué par l'actionnement du volet directionnel (13) dans le tuyau d'alimentation d'air (12).

11. Procédé selon les revendications 1 à 13, **caractérisé en ce que** le signal pour le retour de l'élément d'étanchéité vers la position de repos est émis par l'intermédiaire de la commande du pont de chargement (13).

12. Procédé selon l'une ou plusieurs des revendications 1 à 14, **caractérisé en ce que** le retour de l'élément d'étanchéité vers la position de repos est effectué par l'inversion du ventilateur (11).

13. Procédé selon l'une ou plusieurs des revendications 1 à 15, **caractérisé en ce qu'**un réglage automatique de la position est prévu, lequel adapte automatiquement la position de l'élément d'étanchéité à la position variable du pont de chargement.
